# EUROPÄISCHE PATENTSCHRIFT

(11) **EP 4 592 054 B1**
(45) Veröffentlichungstag und Bekanntmachung des Hinweises auf die Patenterteilung: **26.11.2025**
(21) Anmeldenummer: 24154519.3
(22) Anmeldetag: 29.01.2024
(51) Int. Cl.: B29C 49/04, B29C 49/20, B29C 49/50, B29C 49/02, B29K 23/00, B29L 23/00, B29C 49/42

(54) **VERFAHREN ZUR HERSTELLUNG EINER ROHRANORDNUNG**
METHOD OF MANUFACTURING A PIPE ASSEMBLY
PROCÉDÉ DE FABRICATION D'UN ENSEMBLE DE TUYAUX

(43) Veröffentlichungstag der Anmeldung: 30.07.2025
(73) Patentinhaber: TI Automotive Technology Center GmbH, 76437 Rastatt (DE)
(72) Erfinder: Schäfer, Thorsten, 76889 Steinfeld (DE)
(74) Vertreter: Novagraaf Group

(56) Entgegenhaltungen:
- EP-A1- 3 919 262
- EP-B1- 4 067 048
- CN-A- 110 667 085
- JP-A- H10 211 647
- US-A1- 2014 246 814
- US-A1- 2021 381 626

## Beschreibung

Die Erfindung betrifft ein Verfahren zur Herstellung einer Rohranordnung, welche einen Grundkörper mit zumindest einen Kanal aufweist, wobei dem Kanal wenigstens ein Funktionselement zugeordnet ist.

In der Elektromobilität kommen Rohranordnungen zum Einsatz, um Temperiermedien zu verschiedenen Komponenten eines Elektrofahrzeugs leiten zu können, beispielsweise den Akkumulatoren oder einem Wärmetauscher zum Temperieren der Fahrgastzelle. Akkumulatoren weisen eine optimale Leistungsfähigkeit nur innerhalb eines begrenzten Temperaturspektrums auf, sodass es je nach Umgebungstemperatur erforderlich sein kann, die Akkumulatoren zu erwärmen oder zu kühlen. Ebenso ist es erforderlich, eine Fahrgastzelle in Abhängigkeit der Umgebungstemperatur entweder zu kühlen oder zu erwärmen. Durch die Rohranordnung können Temperiermedien mit unterschiedlichen Temperaturen verteilt und verschiedenen Komponenten zugeleitet werden.

Durch den nur begrenzt zur Verfügung stehenden Bauraum in Elektrofahrzeugen besteht die Anforderung, dass die Rohranordnung besonders kompakt sein soll, wobei es bekannt ist, verschiedene Funktionselemente direkt in die Rohranordnung einzubringen. Des Weiteren ist es bekannt, die Rohranordnung im Blasformverfahren herzustellen, wobei die Rohranordnung mehrere Kanäle aufweisen kann und Funktionselemente während des Blasformverfahrens in der Rohranordnung angeordnet werden. Eine derartige Anordnung ist beispielsweise aus der EP 4 067 048 A1 bekannt.

Aus den Dokumenten EP 3 919 262 A1, US 2014/0246814 A1, US 2021/0381626 A1 und JP H10 211647 A sind Verfahren zur Herstellung einer Rohranordnung für den Transport von Temperiermedium bekannt. Die CN 110 667 085 A zeigt eine Fertigungsmaschine zur Herstellung von Hohlkörpern.

Die der Rohranordnung zugeordneten Funktionselemente können dabei in dem Inneren der Rohranordnung aufgenommen sein oder aus der Rohranordnung hervorstehen. Hervorstehende Funktionselemente können Anschlussbauteile sein, über die die Rohranordnung mit weiteren Komponenten verbunden werden kann, beispielsweise mit Rohrleitungen und dergleichen. Anschlussbauteile sind beispielsweise Stutzen oder Verbinder. Die Anschlussbauteile werden im Zuge des Blasformverfahrens direkt in den Vorformling eingebracht und durch das Blasformverfahren fest in die Rohranordnung eingebunden.

Beim Blasformverfahren wird ein schlauchförmiger Vorformling in eine Blasform eingebracht, wobei sich die Blasformwerkzeuge der Blasform außenseitig an den Vorformling anlegen und die Außenkontur der Rohranordnung vorgeben. Die Blasform umfasst zumeist zwei Blasformwerkzeuge mit einer Kavität, die relativ zueinander verfahrbar sind, wobei der Vorformling beim Schließen der Blasformwerkzeuge an den Randbereichen der Kavität der Blasformwerkzeuge abgepresst wird. In diesem Bereich entsteht an der herzustellenden Rohranordnung eine Naht, wobei sich im Bereich der Kavität die Rohranordnung ausbildet und außerhalb der Kavität überstehendes Material, der Butzen, verbleibt. Der Butzen wird nach Abschluss des Blasformverfahrens von der Rohranordnung entfernt.

Bei zylindrischen, aus der Rohranordnung hervorstehenden Funktionselementen können sich die Blasformwerkzeuge direkt an das Funktionselement anlegen, sodass überstehendes Material direkt entfernt werden kann. Bei nicht-zylindrischen Funktionselementen, beispielsweise bei winkligen oder gebogenen Anschlussbauteilen, kann sich aber das Problem ergeben, dass das überstehende Material nicht ohne weiteres entfernt werden kann.

Der Erfindung liegt die Aufgabe zugrunde, ein einfaches Verfahren zur Herstellung einer Rohranordnung bereitzustellen, bei welchem komplex geformte Funktionselemente in der Rohranordnung angeordnet werden können.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung einer Rohranordnung, welche einen Grundkörper mit zumindest einen Kanal aufweist, wobei dem Kanal wenigstens ein Funktionselement zugeordnet ist, wird das Funktionselement auf einem Werkzeugträger angeordnet, der Werkzeugträger zwischen Blasformwerkzeugen einer Blasform eingebracht, ein schlauchförmiger Vorformling in die Blasform eingeführt und über den Werkzeugträger mit dem Funktionselement gestülpt, die Blasform geschlossen und durch Blasformen aus dem Vorformling die Rohranordnung erzeugt, wobei das zumindest eine Funktionselement stoff- und/oder formschlüssig mit der Rohranordnung verbunden wird, wobei der Werkzeugträger mit zumindest einer Schneidkante ausgerüstet ist, wobei sich die Blasformwerkzeuge beim Schließen der Blasform an die zumindest eine Schneidkante anlegen und den Vorformling derart abpressen, dass ein Trennbereich entsteht.

Bei dem erfindungsgemäßen Verfahren gelangt die Schneidkante des Werkzeugträgers in Kontakt mit dem Vorformling und zusammen mit den Blasformwerkzeugen wird der Vorformling im Bereich der Schneidkante so abgepresst, dass ein Trennbereich entsteht, über den das überstehende Material von der Rohranordnung getrennt werden kann.

Die Schneidkante kann dabei so ausgebildet sein, dass das überstehende Material schon beim Schließen des Blasformwerkzeugs von dem Vorformling und der entstehenden Rohranordnung abgetrennt wird. Es ist aber auch denkbar, dass das überstehende Material nach Abschluss des Blasformverfahrens entfernt wird, beispielsweise durch Schneiden oder Reißen. Vorteilhaft ist, dass ein definierter Trennbereich entsteht, der unabhängig von dem Funktionselement ist, sodass auch Funktionselemente mit einer komplexen Geometrie in die Rohranordnung eingebracht werden können und überstehendes Material auch aus den Bereichen der komplex geformten Funktionselemente entfernt werden können.

Der Werkzeugträger kann länglich ausgebildet sein. Ein derartiger, länglich ausgebildeter Werkzeugträger wird auch als Lanze oder Speer bezeichnet. Vorzugsweise ist der Werkzeugträger ausgebildet, mehrere Funktionselemente aufzunehmen. Der Werkzeugträger weist dafür Aufnahmen auf, in denen die Funktionselemente angeordnet werden können. Die Aufnahmen können beispielsweise als Vertiefungen ausgebildet sein, die in dem Werkzeugträger eingebracht sind. Vor dem Blasformverfahren werden die Werkzeugträger bestückt und mit Funktionselementen versehen. In den Vertiefungen können Halteelemente angeordnet sein, welche die Funktionselemente lagerichtig auf dem Werkzeugträger fixieren.

Der Werkzeugträger kann kastenförmig ausgebildet sein und eine Oberseite und zwei Seitenflächen aufweisen. Die Aufnahmen für die Funktionselemente sind vorzugsweise in die Oberseite eingebracht. Vorzugsweise ist der Werkzeugträger so ausgebildet, dass in dem Werkzeugträger angeordnete Funktionselemente aus dem Werkzeugträger hervorstehen, wobei hervorstehende Abschnitte der Funktionselemente während des Blasformverfahrens stoff- und/oder formschlüssig in die Rohranordnung eingebunden werden. Die in dem Werkzeugträger aufgenommenen Abschnitte der Funktionselemente stehen nach dem Blasformen aus der Rohranordnung hervor.

An den Kanten zwischen Oberseite und Seitenflächen können Schneidkanten angeordnet sein, die sich in Längsrichtung des Werkzeugträgers erstrecken. Während des Blasformens wird der Vorformling an die Schneidkanten angepresst und es entsteht der Trennbereich mit der Rohranordnung auf der einen Seite und dem überstehenden Abschnitt, dem Butzen, auf der anderen Seite. Die Schneidkanten können so ausgebildet sein, dass die Rohranordnung schon während des Blasformens vollständig von dem überstehenden Bereich getrennt wird. Es ist aber auch möglich, dass der überstehende Bereich anschließend durch Nachbearbeiten entlang des Trennbereichs entfernt wird, beispielsweise durch Reißen oder Schneiden. Dadurch, dass die Schneidkanten zwischen Oberseite und Seitenfläche angeordnet sind, ist das Funktionselement bei der fertig hergestellten Rohranordnung frei zugänglich. Vorzugsweise sind die Schneidkanten linienförmig, so dass sich auch ein linienförmiger Trennbereich ergibt.

Vorzugsweise sind die Aufnahmen für die Funktionselemente auf der Oberseite des Werkzeugträgers angeordnet.

Durch den vorzugsweise kastenförmig ausgebildeten Werkzeugträger kann der Vorformling in dem Bereich ebenfalls eine Kastenform ausbilden, wobei der Vorformling ein Volumen einschließt, in welchem die aus der Rohranordnung hervorstehenden Abschnitte des Funktionselementes aufgenommen sind. Dabei können auch komplex geformte Funktionselemente, beispielsweise winklige Funktionselemente oder gebogene Funktionselemente in das Volumen hineinragen. Durch die an dem Werkzeugträger angeordnete Schneidkante kann der kastenförmig ausgebildete Bereich nach dem Blasformen geöffnet werden, sodass die Funktionselemente frei liegen.

Sind die Aufnahmen an der Oberseite angeordnet und die Schneidkanten an der Kante zwischen der Oberseite und den Seitenflächen, ergeben sich linienförmige Trennbereiche, durch die lediglich der der Oberseite zugeordnete Abschnitt des Vorformlings an dem Blasformteil, der Rohranordnung, verbleibt. Die den Seitenflächen und dem Boden des Werkzeugträgers zugeordneten Abschnitte werden nach dem Blasformen entfernt, bzw. lösen sich während des Blasformens selbsttätig von der Rohranordnung. Dadurch sind die aus der Rohranordnung hervorstehenden Abschnitte der Funktionselemente frei zugänglich und ein Entformen des überstehenden Materials ist auch bei komplex geformten Funktionselementen problemlos möglich.

Die Funktionselemente können Anschlussbauteile sein. Anschlussbauteile sind beispielsweise Stutzen oder Verbinder, durch die weitere Komponenten, beispielsweise Rohrleitungen, Ventile und dergleichen an die Rohranordnung angebunden werden können.

Die Funktionselemente können aus Kunststoff oder aus metallischem Werkstoff bestehen.

Die Blasformwerkzeuge können den Vorformling während des Blasformens zur stoff- und/oder formschlüssigen Anbindung an das Funktionselement andrücken. Dadurch kann das Funktionselement fest und mediendicht in der Rohranordnung angeordnet werden. Bei einer stoffschlüssigen Anbindung sind die Funktionselemente mediendicht an die Rohranordnung angebunden. Zumindest bei einer formschlüssigen Anbindung der Funktionselemente an die Rohranordnung können zur Verbesserung der Dichtheit zwischen dem Funktionselement und der Rohranordnung Dichtelemente wie O-Ringe vorgesehen sein.

Die Funktionselemente können Hinterschnitte aufweisen. Beispielsweise können die Funktionselemente Anschlussbauteile ausbilden, welche winklig oder gebogen sind. Ein Funktionselement kann beispielsweise als 90-Grad-gebogenes Rohrelement ausgebildet sein. Durch das erfindungsgemäße Verfahren können derartige Funktionselemente problemlos in die Rohranordnung eingebunden werden.

Eine erfindungsgemäße Rohranordnung ist nach dem zuvor beschriebenen Verfahren erhältlich. Die Funktionselemente können Anschlussbauteile mit einer komplexen Geometrie sein.

Einige Ausgestaltungen der erfindungsgemäßen Rohranordnung und des erfindungsgemäßen Verfahrens werden nachfolgend anhand der Figuren näher erläutert. Diese zeigen, jeweils schematisch:
- Fig. 1: eine Rohranordnung;
- Fig. 2: eine Blasform im Schnitt;
- Fig. 3: einen Werkzeugträger;
- Fig. 4: die Position des Werkzeugträgers innerhalb des Vorformlings während der Herstellung der Rohranordnung.

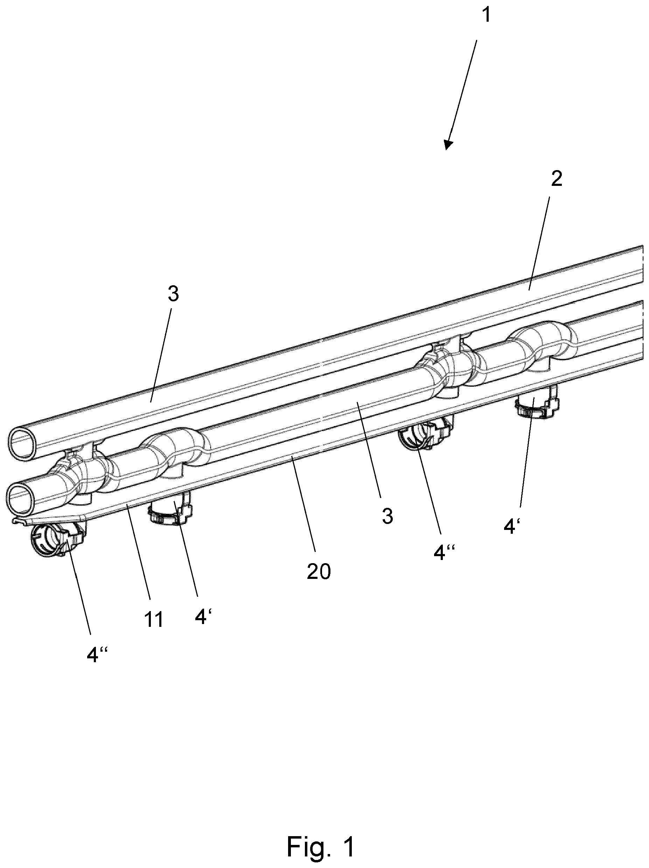

**Fig. 1** zeigt eine Rohranordnung 1 für den Transport von Medien. Die Rohranordnung 1 bildet eine Verteilstruktur für Temperiermedien, wobei die Rohranordnung 1 in einem Temperierkreislauf eines Elektrofahrzeugs zum Einsatz gelangt. Über die Rohranordnung 1 können Temperiermedien verteilt und zu den zu temperierenden Einrichtungen, beispielsweise den Akkumulatoren, den Elektromotoren, der Leistungselektronik oder den Wärmetauschern der Fahrgastzellentemperierung, geleitet werden.

Die Rohranordnung 1 umfasst einen Grundkörper 2, welcher als Blasformteil ausgebildet ist und wobei aus dem Grundkörper 2 mehrere Kanäle 3 ausgebildet sind. Den Kanälen 3 sind Funktionselemente 4 zugeordnet, wobei die Funktionselemente 4 Anschlussbauteile bilden. Vorliegend sind die Funktionselemente 4 als Verbindungselemente für eine direkte Verbindung mit den Akkumulatoren des Fahrzeugs ausgebildet. Alternativ können die Funktionselemente 4 als Anschlussstutzen ausgebildet sein und der Aufnahme von Schläuchen für die Verbindung von Komponenten mit der Rohranordnung 1 dienen.

Erste Funktionselemente 4' sind zylindrisch ausgebildet und zweite Funktionselemente 4" weisen einen 90°-Winkel auf. Dabei weisen zumindest die gebogenen Funktionselemente 4" Hinterschnitte auf.

Der Grundkörper 2 ist ebenso wie die Funktionselemente 4 aus polymerem Material ausgebildet. Der Grundkörper 2 ist bei der vorliegenden Ausgestaltung aus Polypropylen ausgebildet und die Funktionselemente 4 ebenfalls aus Polypropylen. Die Funktionselemente 4 sind im Spritzgießverfahren hergestellt, wobei der Kunststoff für die Funktionselemente 4 so ausgebildet ist, dass die Glasübergangstemperatur im Bereich der für die Formgebung des Grundkörpers 2 im Blasformverfahren erforderlichen Temperatur liegt, so dass sich die Funktionselemente 4 während des Blasformverfahrens stoffschlüssig mit dem Grundkörper 2 verbinden.

Die Funktionselemente 4 sind direkt, stoffschlüssig und verliersicher mit dem Grundkörper 2 verbunden, wobei eine strömungsleitende Verbindung mit den Kanälen 3 besteht. Durch den Stoffschluss sind die Funktionselemente 4 mediendicht mit dem Grundkörper verbunden.

Die Funktionselemente 4 können auch formschlüssig an dem Grundkörper festgelegt sein. Dabei können zwischen dem Grundkörper 2 und den Funktionselementen 4 Dichtelemente angeordnet sein, sodass die Funktionselemente 4 mediendicht mit dem Grundkörper 2 verbunden sind.

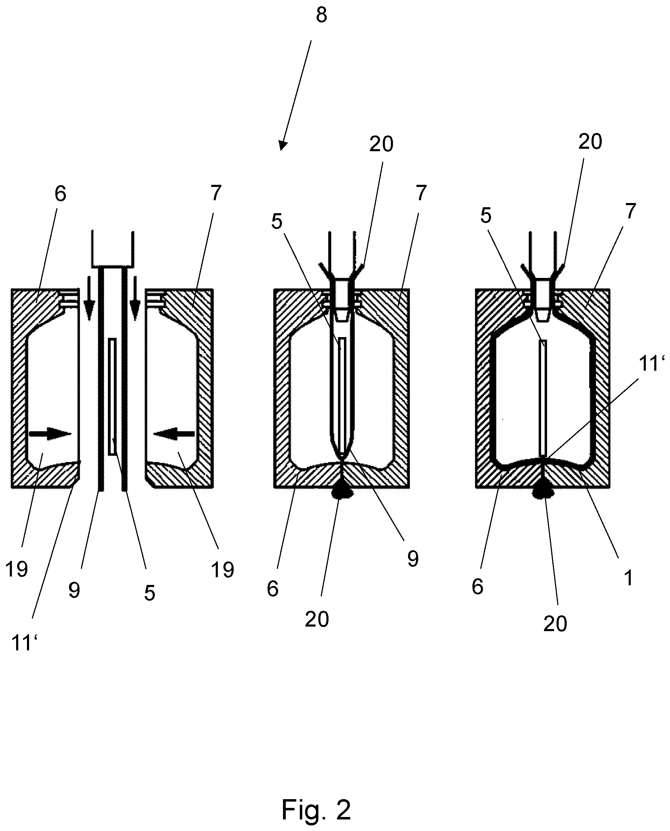

**Fig. 2** zeigt eine Blasform 8 mit zwei zueinander verfahrbaren Blasformwerkzeugen 6, 7. In die Blasformwerkzeuge 6, 7 ist jeweils eine Kavität 19 eingebracht, welche die Außenkontur der Rohranordnung 1 vorgibt.

Zur Herstellung der Rohranordnung 1 werden in einem ersten Schritt die Funktionselemente 4 auf einem Werkzeugträger 5 angeordnet und der mit den Funktionselementen 4 bestückte Werkzeugträger 5 wird zwischen die Blasformwerkzeuge 6, 7 eingebracht. Danach wird ein extrudierter, schlauchförmiger Vorformling 9 aus polymerem Werkstoff in die Blasform 8 eingeführt und über den Werkzeugträger 5 mit den Funktionselementen 4 gestülpt.

Anschließend wird die Blasform 8 geschlossen, indem die Blasformwerkzeuge 6, 7 aufeinander zu bewegt werden und durch Blasformen wird aus dem Vorformling 9 die Rohranordnung 1 erzeugt. Hierzu wird über eine Lanze im Inneren des Vorformlings 9 ein Druck aufgebaut, so dass sich der Vorformling 9 an die Wand der Kavitäten 19 anlegt und dabei die Rohranordnung 1 ausformt. Gleichzeitig mit der Formgebung werden die Funktionselemente 4 stoffschlüssig mit der Rohranordnung 1 verbunden. Hierzu drücken die Blasformwerkzeuge 6, 7 den Vorformling 9 während des Blasformens zur stoffschlüssigen Anbindung an die Funktionselemente 4 an.

An den Kanten der Kavitäten 19 wird der Vorformling 9 nach dem Schließen der Blasformwerkzeuge 6, 7 abgepresst, wobei sich im Inneren der Kavitäten 19 die Rohranordnung ausformt und an den gegenüberliegenden Kanten der Kavitäten 19 eine Naht mit einem ersten Trennbereich 11' entsteht. Das abgepresste Material außerhalb der Kavitäten 19 ist überstehendes Material 20, auch als Butzen bezeichnet. Entlang des Trennbereichs 11' wird das überstehende Material 20 nach dem Blasformen entfernt oder das überstehende Material 20 wird schon beim Schließen der Blasformwerkzeuge 6, 7 entlang des Trennbereichs 11' abgetrennt.

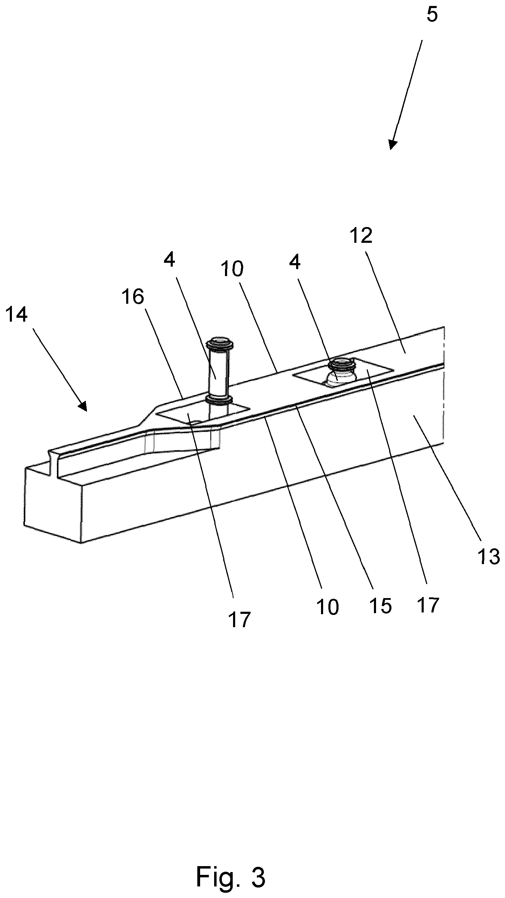

Fig. 3 zeigt einen Werkzeugträger 5, der mit Funktionselementen 4 bestückt ist und über den in der Blasform 8 der Vorformling 9 gestülpt wird. Der Werkzeugträger 5 besteht aus metallischem Werkstoff, ist länglich und kastenförmig ausgebildet und weist eine Oberseite 12 und zwei Seitenflächen 13, 14 auf. Auf der Oberseite 12 des Werkzeugträgers 5 sind Aufnahmen 17 für Funktionselemente 4 angeordnet. Zur Ausgestaltung der Aufnahmen 17 sind Ausnehmungen in den Werkzeugträger 5 eingebracht, in die die Funktionselemente 4 eingesteckt werden können. Die Aufnahmen 17 weisen ferner Halteelemente auf, um die Funktionselemente 4 lagerichtig in den Aufnahmen 17 fixieren zu können.

Der Werkzeugträger 5 ist mit zwei Schneidkanten 10 ausgerüstet, wobei sich die Blasformwerkzeuge 6, 7 beim Schließen der Blasform 8 an die Schneidkanten 10 anlegen und den Vorformling derart abpressen, dass ein Trennbereich 11 entsteht.

Die Schneidkanten 10 sind an den Kanten 15, 16 zwischen der Oberseite 12 und den Seitenflächen 13, 14 angeordnet und erstrecken sich in Längsrichtung des Werkzeugträgers 5. Durch diese Ausgestaltung ergeben sich nach dem Blasformen an der Rohranordnung 1 zwei linienförmige Trennbereiche 11.

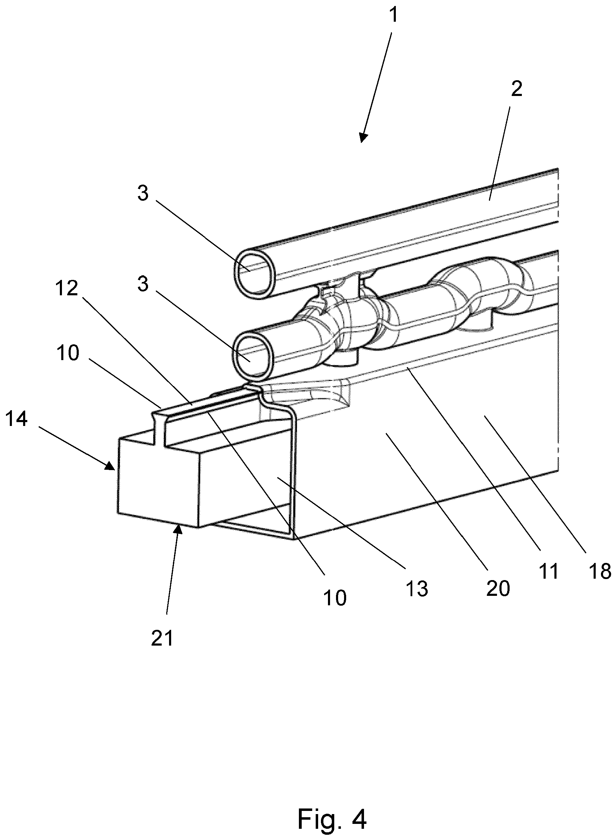

**Fig. 4** zeigt im Detail einen Bereich des Vorformlings 9, bzw. der Rohranordnung 1 mit darin aufgenommenem Werkzeugträger 5 während des Blasformens. Die Blasform 8 ist so ausgebildet, dass um den Werkzeugträger 5 aus dem Vorformling 9 ein kastenförmiger Bereich 18 entsteht, der nach dem Blasformen entlang der durch die Schneidkanten 10 gebildeten Trennbereiche 11 geöffnet werden kann, sodass Funktionselemente 4 frei liegen.

Durch die an der Oberseite 12 des Werkzeugträgers 5 angeordneten Aufnahmen 17 und den Schneidkanten 10 an den Kante 15, 16 zwischen Oberseite 12 und Seitenflächen 13, 14 ergeben linienförmige Trennbereiche 11 durch die nach dem Abtrennen des überstehenden Materials 20 lediglich der der Oberseite 12 zugeordnete Abschnitt des Vorformlings 9 verbleibt. Die den Seitenflächen 13, 14 und dem Boden 21 des Werkzeugträgers 5 zugeordneten Abschnitte bilden das überstehende Material 20 und werden nach dem Blasformen entfernt, bzw. lösen sich während des Blasformens selbsttätig von der Rohranordnung 1. Dadurch sind die aus der Rohranordnung 1 hervorstehenden Abschnitte der Funktionselemente 4 frei zugänglich und ein Entformen des überstehenden Materials 20 ist auch bei komplex geformten Funktionselementen 4 problemlos möglich.

## Patentansprüche

1. Verfahren zur Herstellung einer Rohranordnung (1), welche einen Grundkörper (2) mit zumindest einem Kanal (3) aufweist, wobei dem Kanal (3) wenigstens ein Funktionselement (4) zugeordnet ist, wobei das Funktionselement (4) auf einem Werkzeugträger (5) angeordnet wird, der Werkzeugträger (5) zwischen Blasformwerkzeugen (6, 7) einer Blasform (8) eingebracht wird, ein schlauchförmiger Vorformling (9) in die Blasform (8) eingeführt und über den Werkzeugträger (5) mit dem Funktionselement (4) gestülpt wird, die Blasform (8) geschlossen und durch Blasformen aus dem Vorformling (9) die Rohranordnung (1) erzeugt wird, wobei das zumindest eine Funktionselement (4) stoff- und/oder formschlüssig mit der Rohranordnung (1) verbunden wird, **dadurch gekennzeichnet, dass** der Werkzeugträger (5) mit zumindest einer Schneidkante (10) ausgerüstet ist, wobei sich die Blasformwerkzeuge (6, 7) beim Schließen der Blasform (8) an die zumindest eine Schneidkante (10) anlegen und den Vorformling derart abpressen, dass ein Trennbereich (11) entsteht.

2. Verfahren nach Anspruch 1, **dadurch gekennzeichnet, dass** der Werkzeugträger (5) länglich ausgebildet ist.

3. Verfahren nach Anspruch 1 oder 2, **dadurch gekennzeichnet, dass** der Werkzeugträger (5) kastenförmig ausgebildet ist und eine Oberseite (12) und zwei Seitenflächen (13, 14) aufweist.

4. Verfahren nach Anspruch 3, **dadurch gekennzeichnet, dass** an den Kanten (15, 16) zwischen der Oberseite (12) und den Seitenflächen (13, 14) Schneidkanten (10) angeordnet sind, die sich in Längsrichtung des Werkzeugträgers (5) erstrecken.

5. Verfahren nach Anspruch 4, **dadurch gekennzeichnet, dass** auf der Oberseite (12) des Werkzeugträgers (5) Aufnahmen (17) für Funktionselemente (4) angeordnet sind.

6. Verfahren nach einem der Ansprüche 3 bis 5, **dadurch gekennzeichnet, dass** die Blasform (8) so ausgebildet ist, dass aus dem Vorformling (9) während des Blasformens ein kastenförmiger Bereich (18) um den Werkzeugträger (5) entsteht, der nach dem Blasformen entlang des durch die Schneidkanten (10) gebildeten Trennbereichs (11) geöffnet wird.

7. Verfahren nach Anspruch 6, **dadurch gekennzeichnet, dass** der Trennbereich (11) linienförmig ist.

8. Verfahren nach einem der Ansprüche 1 bis 7, **dadurch gekennzeichnet, dass** das Funktionselement (4) ein Anschlussbauteil ist.

9. Verfahren nach einem der Ansprüche 1 bis 8, **dadurch gekennzeichnet, dass** die Funktionselemente (4) Hinterschnitte ausbilden.

10. Verfahren nach einem der Ansprüche 1 bis 9, **dadurch gekennzeichnet, dass** die Blasformwerkzeuge (6, 7) den Vorformling (9) während des Blasformens zur stoffschlüssigen Anbindung an das Funktionselement (4) andrücken.

## Claims

1. Method for producing a pipe arrangement (1) comprising a main body (2) which has at least one channel (3), wherein at least one functional element (4) is associated with the channel (3), wherein the functional element (4) is arranged on a tool carrier (5), the tool carrier (5) is brought between blow molding tools (6, 7) of a blow mold (8), a tubular preform (9) is introduced into the blow mold (8) and placed over the tool carrier (5) with the functional element (4), the blow mold (8) is closed and the pipe arrangement (1) is generated by blow molding from the preform (9), wherein the at least one functional element (4) is connected to the pipe arrangement (1) in an integral and/or form-fitting manner, **characterized in that** the tool carrier (5) is equipped with at least one cutting edge (10), wherein the blow molding tools (6, 7) abut the at least one cutting edge (10) when the blow mold (8) is closed and press the preform out such that a separating region (11) is created.

2. Method according to claim 1, **characterized in that** the tool carrier (5) is elongate.

3. Method according to claim 1 or 2, **characterized in that** the tool carrier (5) is box-shaped and has an upper face (12) and two lateral surfaces (13, 14).

4. Method according to claim 3, **characterized in that** cutting edges (10) are arranged on the edges (15, 16) between the upper face (12) and the lateral surfaces (13, 14), which cutting edges extend in the longitudinal direction of the tool carrier (5).

5. Method according to claim 4, **characterized in that** receptacles (17) for functional elements (4) are arranged on the upper face (12) of the tool carrier (5).

6. Method according to any of claims 3 to 5, **characterized in that** the blow mold (8) is designed such that a box-shaped region (18) is formed around the tool carrier (5) from the preform (9) during blow molding, which box-shaped region is opened, after blow molding, along the separating region (11) formed by the cutting edges (10).

7. Method according to claim 6, **characterized in that** the separating region (11) is linear.

8. Method according to any of claims 1 to 7, **characterized in that** the functional element (4) is a connecting component.

9. Method according to any of claims 1 to 8, **characterized in that** the functional elements (4) form undercuts.

10. Method according to any of claims 1 to 9, **characterized in that** the blow molding tools (6, 7) press on the preform (9) during blow molding to ensure it is integrally bonded to the functional element (4).

## Revendications

1. Procédé pour la fabrication d'un agencement de tubes (1), lequel présente un corps de base (2) comportant au moins un canal (3), dans lequel au moins un élément fonctionnel (4) est associé au canal (3), dans lequel l'élément fonctionnel (4) est disposé sur un support pour outil (5), le support pour outil (5) est placé entre des outils de moulage par soufflage (6, 7) d'un moule de soufflage (8), une préforme (9) en forme de tuyau est introduite dans le moule de soufflage (8) et enfilée sur le support pour outil (5) avec l'élément fonctionnel (4), le moule de soufflage (8) est fermé et l'agencement de tubes (1) est produit par moulage par soufflage à partir de la préforme (9), dans lequel l'au moins un élément fonctionnel (4) est relié à l'agencement de tubes (1) par liaison de matière et/ou par complémentarité de forme, **caractérisé en ce que** le support pour outil (5) est équipé d'au moins une arête de coupe (10), dans lequel les outils de moulage par soufflage (6, 7) s'appuient contre l'au moins une arête de coupe (10) lors de la fermeture du moule de soufflage (8) et pressent la préforme de telle sorte qu'il en résulte une zone de séparation (11).

2. Procédé selon la revendication 1, **caractérisé en ce que** le support pour outil (5) est réalisé sous forme allongée.

3. Procédé selon la revendication 1 ou 2, **caractérisé en ce que** le support pour outil (5) est réalisé sous forme de caisson et présente une face supérieure (12) et deux surfaces latérales (13, 14).

4. Procédé selon la revendication 3, **caractérisé en ce que** des arêtes de coupe (10) sont disposées sur les bords (15, 16) entre la face supérieure (12) et les surfaces latérales (13, 14), lesquelles arêtes de coupe s'étendent dans la direction longitudinale du support pour outil (5).

5. Procédé selon la revendication 4, **caractérisé en ce que** des logements (17) pour des éléments fonctionnels (4) sont disposés sur la face supérieure (12) du support pour outil (5).

6. Procédé selon l'une des revendications 3 à 5, **caractérisé en ce que** le moule de soufflage (8) est conçu de sorte qu'une zone (18) en forme de caisson est formée autour du support pour outil (5) à partir de la préforme (9) pendant le moulage par soufflage, laquelle zone est ouverte après le moulage par soufflage le long de la zone de séparation (11) formée par les arêtes de coupe (10).

7. Procédé selon la revendication 6, **caractérisé en ce que** la zone de séparation (11) est de forme linéaire.

8. Procédé selon l'une des revendications 1 à 7, **caractérisé en ce que** l'élément fonctionnel (4) est un composant de raccordement.

9. Procédé selon l'une des revendications 1 à 8, **caractérisé en ce que** les éléments fonctionnels (4) forment des contre-dépouilles.

10. Procédé selon l'une des revendications 1 à 9, **caractérisé en ce que** les outils de moulage par soufflage (6, 7) pressent la préforme (9) contre l'élément fonctionnel (4) pendant le moulage par soufflage pour une liaison par liaison de matière.
